# EUROPÄISCHE PATENTANMELDUNG

(11) **EP 4 611 194 A1**
(43) Veröffentlichungstag der Anmeldung: **03.09.2025**
(21) Anmeldenummer: 24161022.9
(22) Anmeldetag: 01.03.2024
(51) Int. Cl.: H02G 3/10, H02G 3/08, H01R 9/03, H01R 4/2407, H01R 4/2408, H01R 4/2433, H02G 3/16

(54) **KABELANSCHLUSSSYSTEM**

(71) Anmelder: Woertz AG, 4132 Muttenz (CH)
(72) Erfinder: Onodi, Tamas, 4132 Muttenz (CH); Tschudin, Beat, 4132 Muttenz (CH); Castronari, Luca, 4132 Muttenz (CH)
(74) Vertreter: Samson & Partner Patentanwälte mbB

(57) **Zusammenfassung**

Ein Kabelanschlusssystem zum Verbinden einer Durchgangsleitung mit einer Ladestation wird bereitgestellt, wobei das Kabelanschlusssystem mehrere Adern einer Durchgangsleitung umfasst, die als separate Rundkabel ausgeführt sind, wobei die Rundkabel der Durchgangsleitung parallel zueinander geführt werden, ein Abzweiggehäuse, wobei das Abzweiggehäuse mehrere Eingänge für je ein Rundkabel der Durchgangsleitung, sowie mehrere Ausgänge für je ein Rundkabel der Durchgangsleitung umfasst. Das Abzweiggehäuse umfasst mehrere Abgänge für Abzweigleitungen, die über die Abgänge mit der Ladestation verbindbar sind, sowie mehrere in das Abzweiggehäuse eingesetzte Verbindungsdosen, die über die Abgänge mit der Ladestation verbindbar sind. Jeweils eine Verbindungsdose kontaktiert ein Rundkabel der Durchgangsleitung abisolierfrei über Durchdringungskontaktelemente, die dazu geeignet sind, die Isolierung des jeweiligen Rundkabels zu durchringen und Kontakt mit dessen Leiter herzustellen. Eine Verbindungsdose verbindet jeweils eine Abzweigleitung mit dem zugehörigen Rundkabel der Durchgangsleitung, wodurch jeweils eine Abzweigleitung innerhalb des Abzweiggehäuses zu einem zugehörigen Abgang für die Abzweigleitung verbunden ist.

## Beschreibung

### GEBIET DER ERFINDUNG

Die Erfindung betrifft ein Kabelanschlusssystem zum Verbinden einer Durchgangsleitung mit einer Ladestation.

### HINTERGRUND DER ERFINDUNG

CH 717763 A2 betrifft ein Abzweigsystem, welches ein Schutzgehäuse mit Durchgangsöffnungen zum Hindurchführen eines mehradrigen Hauptkabels umfasst und mindestens eine Abzweigklemme mit einem elektrischen Verbindungselement zum unterbrechungsfreien Verbinden jeweils einer Ader des Hauptkabels mit einem Abzweigleitung. Im Inneren des Schutzgehäuses sind die freigelegten Adern des Hauptkabels durch eine Spreizvorrichtung mit mindestens einem nicht brennbaren Abstandshalter beabstandet zueinander gehalten.

### KURZFASSUNG DER ERFINDUNG

Ein Kabelanschlusssystem zum Verbinden einer Durchgangsleitung mit einer Ladestation wird bereitgestellt, wobei das Kabelanschlusssystem mehrere Adern einer Durchgangsleitung umfasst, die als separate Rundkabel ausgeführt sind, wobei die Rundkabel der Durchgangsleitung parallel zueinander geführt werden, ein Abzweiggehäuse, wobei das Abzweiggehäuse mehrere Eingänge für je ein Rundkabel der Durchgangsleitung, sowie mehrere Ausgänge für je ein Rundkabel der Durchgangsleitung umfasst. Das Abzweiggehäuse umfasst mehrere Abgänge für Abzweigleitungen umfasst, die über die Abgänge mit der Ladestation verbindbar sind, sowie mehrere in das Abzweiggehäuse eingesetzte Verbindungsdosen, die über die Abgänge mit der Ladestation verbindbar sind. Jeweils eine Verbindungsdose kontaktiert ein Rundkabel der Durchgangsleitung abisolierfrei. Es sind Durchdringungskontaktelemente für die abisolierfreie Kontaktierung vorgesehen, die dazu geeignet sind die Isolierung des jeweiligen Rundkabels zu durchringen und Kontakt mit dessen Leiter herzustellen. Eine Verbindungsdose verbindet jeweils eine Abzweigleitung mit dem zugehörigen Rundkabel der Durchgangsleitung, wodurch jeweils eine Abzweigleitung innerhalb des Abzweiggehäuses zu einem zugehörigen Abgang für die Abzweigleitung verbunden ist.

### ALLGEMEINE ERLÄUTERUNG, AUCH BETREFFEND FAKULTATIVE AUSGESTALTUNGEN DER ERFINDUNG

Ein erster Aspekt der Erfindung betrifft ein Kabelanschlusssystem zum Verbinden einer Durchgangsleitung mit einer Ladestation, z.B. als "Wallbox" ausgeführt.

Im Stand der Technik ist es üblich, Verbraucher über entlang von Wänden verlegte Flachkabel als Durchgangsleitung zu versorgen, wobei Abzweigleitungen von einem Flachkabel hin zu einem Verbraucher geführt werden. Bei der Versorgung von (Wand-)Ladestationen (beispielsweise für Elektroautos) müssen jedoch die Durchgangsleitungen teils hohe Ströme tolerieren und weisen deshalb Leitungsquerschnitte von 25 mm² oder mehr auf.

Das Kabelanschlusssystem gemäß dem ersten Aspekt der Erfindung umfasst mehrere Adern einer Durchgangsleitung, die als separate Rundkabel ausgeführt sind, wobei die Rundkabel der Durchgangsleitung parallel zueinander geführt werden. Die Rundkabel der Durchgangsleitung können dabei über ihre gesamte Erstreckung einen gleichbleibenden Abstand zueinander aufweisen.

Die einzelnen Rundkabel weisen eine im Vergleich zu z.B. kompakten Flachkabeln eine höhere Flexibilität, insbesondere Biegsamkeit, auf, sodass diese beispielsweise in Garagen auch bei hohen Leitungsquerschnitten von mindestens (über 25 mm²) leichter um Ecken geführt werden können. Darüber hinaus erweist sich auch die Befestigung von Rundkabeln an Wänden als einfacher als die von Flachkabeln, da weniger tragende Elemente vorgesehen werden müssen um das im Allgemeinen geringere Gewicht von einzelnen Rundkabeln statt eines kompakten Flachkabels zu tragen.

Durch die parallele Führung der einzelnen Rundkabel werden Kurzschlüsse effektiv verhindert. Die Länge der Durchgangsleitung, also der einzelnen Rundkabel kann beispielsweise 50 Meter betragen, die Länge der Durchgangsleitung kann an die lokalen Gegebenheiten z.B. in einer Garage zum Anschließen der Ladestation angepasst werden.

Das Kabelanschlusssystem umfasst ein Abzweiggehäuse, wobei das Abzweiggehäuse mehrere Eingänge für je ein Rundkabel der Durchgangsleitung, sowie mehrere Ausgänge für je ein Rundkabel der Durchgangsleitung umfasst. Ebenso umfasst das Abzweiggehäuse mehrere Abgänge für Abzweigleitungen, die über die Abgänge mit der Ladestation verbindbar sind.

Die Wandladstation kann beispielsweise eine 11 kW Ladestation mit einer Nennstromaufnahme von 16 A bei 230 V Netzspannung oder eine 22 kW Ladenstation mit einer Nennstromaufnahme von 32 A bei 230 V Netzspannung sein.

Die Rundkabel der Durchgangsleitung werden dabei gerade und mit gleichbleibendem Abstand parallel zueinander über die Eingänge und die Ausgänge für die Rundkabel durch das Abzweiggehäuse geführt.

Die Abgänge für die Abzweigleitungen sind beispielsweise entweder auf derselben Seite des beispielsweise quaderförmigen Abzweiggehäuses wie die Ausgänge für die Rundkabel angeordnet. Die Abgänge für die Abzweigleitungen können auch beispielsweise quer zu den Ausgängen für die Rundkabel angeordnet sein, beispielsweise auf einer Seite des Abzweiggehäuses, die einen rechten Winkel mit der Seite mit den Eingängen bzw. den Ausgängen für die Rundkabel einschließt. Die Abgänge für die Abzweigleitungen können ferner als Steckbuchsen für Ladestationsanschlüsse ausgeführt sein, die beispielsweise entlang einer Seite des Abzweiggehäuses angeordnet sind.

Das Kabelanschlusssystem umfasst mehrere in das Abzweiggehäuse eingesetzte Verbindungsdosen, die über die Abgänge mit der Ladestation verbindbar sind, wobei jeweils eine Verbindungsdose ein Rundkabel der Durchgangsleitung abisolierfrei kontaktiert.

Es sind Durchdringungskontaktelemente für die abisolierfreie Kontaktierung vorgesehen, die dazu geeignet sind die Isolierung des jeweiligen Rundkabels zu durchringen und Kontakt mit dessen Leiter herzustellen.

Die abisolierfreie Kontaktierung kann beispielsweise über Kontaktmesser als Durchdringungskontakteelemente oder dergleichen erfolgen, welche in den Verbindungsdosen vorgesehen sind. Im Allgemeinen ist der Durchmesser eines Aderleiters eines Rundkabels der Durchgangsleitung größer als der Durchmesser eines Aderleiters einer Abzweigleitung. Es können daher mehr Kontaktmesser zur Kontaktierung des Rundkabels der Durchgangsleitung vorgesehen sein als zur Kontaktierung der Abzweigleitung.

Die Verbindungsdosen können entlang einer Längsachse des Abzweiggehäuses, also entlang der Durchführungsrichtung für die Rundkabel der Durchgangsleitung, öffnungsfähig sein, beispielsweise um eine Abzweigleitung zur Kontaktierung in die Verbindungsdose einzuführen.

Das gesamte Abzweiggehäuses ist beispielsweise derart ausgestaltet, dass es eine Dichtheit gegenüber Wasser bzw. Staub der Klasse IP20, IP40 bzw. IP58 oder IP65 oder IP68 aufweist. Hierfür können Dichtungen vorgesehen sein (weitere Einzelheiten folgen in der Beschreibung der konkreten Ausführungsbeispiele). Bevorzugt wird bei Anordnungen mit eingebauten Dichtungen eine Dichtheit gegenüber Wasser bzw. Staub von mindestens der Klasse IP58 erreicht. Das gesamte Anschlusssystem ist somit auch in nassen Umgebungen verwendbar. Das Abzweiggehäuse ist also vorgesehen um einen Kontakt des durch die Kontaktierung verletzten Kabelmantels eines Rundkabels der Durchgangsleitung bzw. einer Abzweigleitung mit Flüssigkeiten wie Wasser oder dergleichen zu verhindern.

Jeweils eine Verbindungsdose verbindet jeweils eine Abzweigleitung mit dem zugehörigen Rundkabel der Durchgangsleitung, wodurch jeweils eine Abzweigleitung innerhalb des Abzweiggehäuses zu einem zugehörigen Abgang für die Abzweigleitung verbunden ist. Wenn die Abgänge für die Abzweigleitungen beispielsweise quer zu den Ausgängen für die Rundkabel angeordnet sind (siehe oben), beschreiben die Abzweigleitungen im inneren des Abzweiggehäuses typischerweise einen Bogen im rechten Winkel. Wenn die Abgänge für die Abzweigleitungen beispielsweise auf derselben Seite des Abzweiggehäuses vorgesehen sind wie die Eingänge bzw. Ausgänge für die Rundkabel der Durchgangsleitung, verlaufen die Abzweigleitungen beispielsweise parallel oberhalb der Rundkabel der Durchgangsleitung im Inneren des Abzweiggehäuses.

Fakultativ können die Rundkabel der Durchgangsleitung durch hintereinander angeordnete Abstandshalter voneinander getrennt gehalten werden. Diese Abstandshalter können ein Profil aufweisen, wobei jeweils ein Rundkabel der Durchgangsleitung auf jeweils einer Auflagefläche (im Profil) eines Abstandshalters aufliegt, um die Adern der Durchgangsleitung parallel zueinander zu dem Abzweiggehäuse hin bzw. von dem Abzweiggehäuse weg zu führen. Die Abstandshalter können dabei, beispielsweise einstückig, aus Kunststoff (vor)gefertigt sein.

Die Abstandshalter können in regelmäßigen Abständen (beispielsweise 2 Meter der dergleichen) an einer Wand montiert sein, wofür aufgrund des geringen Gewichts der Rundkabel zwei bis drei Schrauben ausreichen können. Bei beispielsweise einer fünfadrigen Durchgangsleitung weisen die Abstandshalter fünf Auflageflächen in ihrem Profil für die fünf Rundkabel der Durchgangsleitung auf. Im Allgemeinen können die Auflageflächen eines Abstandshalters für die Rundkabel parallel untereinander angeordnet sein. Die Auflageflächen können kerbenartig ausgestaltet sein, wobei die Kerben zur Aufnahme der Rundkabel der Durchgangsleitung einen Durchmesser von beispielsweise 35 mm², 50 mm² oder 90 mm² aufweisen können, wobei der Durchmesser der Rundkabel kleiner ist als der Durchmesser der Kerben der Abstandshalter zur Aufnahme dieser Rundkabel.

Die Abstandshalter sind beispielsweise hintereinander beabstandet in einen Kabelkanal eingesetzt, um die Rundkabel der Durchgangsleitung parallel entlang des Kabelkanals zu führen. In diesen Ausführungsformen ist beispielsweise der gesamte Kabelkanal an einer Wand montiert, wobei ein Kabelkanal die Rundkabel der Durchgangsleitung zu dem Abzweiggehäuse hinführt und ein Kabelkanal die Rundkabel der Durchgangsleitung von dem Abzweiggehäuse wegführt.

Das Abzweiggehäuse kann wenigstens teilweise aus Metall oder Kunststoff ausgeführt sein.

Das Abzweiggehäuse ist beispielsweise vorgesehen, um die Kontaktstellen von Durchgangsleitung und Abzweigleitung mechanisch zu schützen bzw. elektromagnetisch abzuschirmen, wobei wenigstens eine Dichtung in dem Abzweiggehäuse vorgesehen ist, um einen Eindringschutz vor Staub und Wasser mindestens gemäß der Klasse IP58 zu ermöglichen

Wenn sowohl der Kabelkanal als auch das Abzweiggehäuse aus Metall gefertigt sind, können die durch die stromführenden Leiter entstehenden Magnetfelder abgeschirmt werden. Zu diesem Zweck kann auch eine Metalleinlage in einem Kunststoffgehäuse vorgesehen sein, sofern das Abzweiggehäuse überwiegend aus Kunststoff gefertigt ist. Ebenso kann eine metallische Schutzschicht (beispielsweise aufgedampft) an der Außenseite eines (überwiegend) aus Kunststoff gefertigten Abzweiggehäuses vorgesehen sein. Der Metallfilm bietet dem Kunststoffgehäuse dabei mechanischen Schutz. Mögliche Kunststoffe aus denen das Abzweiggehäuse (zumindest teilweise) gefertigt sein kann sind beispielsweise High-Density-Polyethylen (PE-HD), Linear-Low-Density-Polyethylen (PE-LLD) und Low-Density-Polyethylen (PE-LD) oder dergleichen verwendet werden.

Insgesamt bietet das Abzweiggehäuse also einen mechanischen bzw. elektromagnetischen Schutz für den Abzweig.

Die Durchgangsleitung kann beispielsweise fünf einzelne Rundkabel als Adern aufweisen, wobei vorzugsweise drei der Rundkabel der Durchgangsleitung als Phasenleiter vorgesehen sind, und wobei fünf entsprechende Abzweigleitungen zu zugehörigen Rundkabeln der Durchgangsleitung über die Verbindungsboxen im Inneren des Abzweiggehäuses verbunden werden.

Die Durchgangsleitung aus mehreren einzelnen Rundkabeln ermöglicht in Kombination mit den Verbindungsboxen im Inneren des Abzweiggehäuses eine schnelle und einfache Installation der Abzweigleitung erreicht. Die Rundkabel werden durch die Verbindungsboxen eben abisolierfrei über Piercing-Technik kontaktiert und werden zur Kontaktierung nicht aufgetrennt, sondern eben angezapft.

Die Rundkabel bilden "Strombahnen", die im Gegensatz zu Stromschienen aus flexiblen Leitern bestehen und somit eben auch leicht um Ecken geführt werden können, was die Installation einer Abzweigleitung mit Wallbox zusätzlich erleichtert.

Dabei entsprechen die fünf einzelnen Rundkabel der Durchgangsleitung beispielsweise drei verschiedenen Phasenleitern, und die übrigen zwei Rundkabel der Durchgangsleitung entsprechen einem Schutzleiter und einem Neutralleiter. Es können zusätzlich zu diesen fünf Rundkabeln auch noch Datenleiter vorhanden sein, der oder die Datenleiter können ebenso einen oder zwei Phasenleiter ersetzen.

In manchen Ausführungsformen weisen die Rundkabel der Durchgangsleitung einen Leitungsquerschnitt im Bereich von 15 mm² bis 150 mm² auf, insbesondere kann der Leitungsquerschnitt der Rundkabel 16 mm², 25 mm², 50 mm², 95 mm² oder 120 mm² betragen, wobei die Rundkabel der Durchgangsleitung vorzugsweise flexibel um Ecken eines Raumes geführt werden können.

Der Leitungsquerschnitt der Abzweigleitung kann im Bereich von 2 mm² bis 10 mm², vorzugsweise 4 mm² betragen. Im Allgemeinen ist der Leitungsquerschnitt der Abzweigleitung wesentlich kleiner als der Leitungsquerschnitt der Durchgangsleitung und beträgt beispielsweise weniger als 30% des Leitungsquerschnittes der Durchgangsleitung.

Die Verbindungsdosen können mehrteilig aufgebaut sein, wobei ein Rundkabel der Durchgangsleitung durch einen ersten Teil einer Verbindungsdose geführt wird, während eine Abzweigleitung bereits vor Herstellung des Kontakts zwischen dem Rundkabel der Durchgangsleitung und der Abzweigleitung fest mit einem zweiten Teil der Verbindungsdose, vorzugsweise einem Deckelteil der Verbindungsdose, verbunden ist.

In einer solchen Ausführungsform ist die Verbindung der Abzweigleitung zu der Verbindungsdose beispielsweise bereits vorkonfektioniert. Die Verbindungsdose kann also bereits mit dort fest geklemmter/verschraubter oder auf sonstige Weise fest mit der Verbindungsdose verbundener Abzweigleitung bereitgestellt/geliefert werden.

Fakultativ sind die Abzweigleitungen bereits im Deckel des Abzweiggehäuses vorinstalliert, indem die Abzweigleitungen bereits im Deckel des Abzweiggehäuses mit den jeweiligen zugeordneten Abgängen verbunden sind. So kann eine Abzweigleitung jeweils bereits fest mit einem Abgang für die jeweilige Abzweigleitung verbunden sein.

Im Falle einer Vorkonfektionierung genügt es beispielsweise die durch das Abzweiggehäuse geführten Rundkabel der Durchgangsleitung in die öffnungsfähig ausgestaltete Verbindungsdose einzuführen und einen Verbindungsmechanismus zu bedienen, um so bereits die Verbindung zwischen den Abzweigleitungen und der Durchgangsleitung herzustellen. Dies ermöglicht ein schnelles und sicheres Herstellen der elektrischen Verbindung zwischen der Durchgangsleitung und den Abgängen der Abzweigdose, welche ihrerseits an die Ladestation angeschlossen werden können.

Die Verbindungsdose kann ein metallisches Kontaktelement umfassen, das zwischen einem Rundkabel der Durchgangsleitung und einer Abzweigleitung vorgesehen ist, beispielsweise so, dass das metallische Kontaktelement das Rundkabel der Durchgangsleitung und die Abzweigleitung gleichzeitig kontaktiert kann. Das Kontaktelement kann dabei beidseitig Durchdringungskontaktelemente, wie z.B. Schneiden, Dorne etc. aufweisen. Ein erster Satz von Durchdringungskontaktelementen des Kontaktelements ist beispielsweise zur abisolierfreien Kontaktierung des Rundkabels der Durchgangsleitung vorgesehen, und ein zweiter Satz von Durchdringungskontaktelemente des Kontaktelements ist zur abisolierfreien Kontaktierung der Abzweigleitung vorgesehen. Es können dabei beispielsweise mehr Durchdringungskontaktelemente in dem Satz von Durchdringungskontaktelementen für die Kontaktierung des Rundkabels der Durchgangsleitung als in dem Satz von Durchdringungskontaktelemente für die Kontaktierung der Abzweigleitung vorgesehen sein.

Die Durchgangsleitung kann über eine Auflagefläche am Boden der Verbindungsdose durch die Dose geführt sein. Das metallische Kontaktelement kann in einer Aufhängung (z.B. aus Kunststoff) über dem Rundkabel der Durchgangsleitung, aber unterhalb einer Aufnahme für die Abzweigleitung (also zwischen dem Rundkabel der Durchgangsleitung und der Abzweigleitung) platziert sein. Beispielsweise mittels einer Schraubklemme die gleichermaßen das Rundkabel, das Kontaktelement und die Abzweigleitung in Richtung Boden der Verbindungsdose und somit in Richtung des dort eingelegten Rundkabels der Durchgangleitung presst (oder einem beliebigen anderen Klemmelement) kann schließlich die Verbindung zwischen Abzweigleitung und dem Rundkabel der Durchgangsleitung hergestellt werden.

Die Verbindungsdose kann einen Bodenteil zur Durchführung des Rundkabels der Durchgangsleitung umfassen, auf dem das Rundkabel der Durchgangsleitung aufliegt, einen Deckelteil zur Aufnahme einer Abzweigleitung, sowie einen isolierenden Einschub. Dabei können sich von dem Einschub wenigsten ein Kontaktmesser in Richtung des Rundkabels der Durchgangsleitung und wenigstens ein Kontaktmesser in Richtung der Abzweigleitung erstrecken, um das Rundkabel der Durchgangsleitung absiolierfrei zu kontaktieren und elektrisch mit der ebenso abisolierfrei kontaktierten Abzweigleitung zu verbinden, wenn der Deckelteil in Richtung des Bodenteils gepresst wird.

Die Verbindungsdose kann ein Hebelelement umfassen, wobei mittels des Hebelelements der Deckelteil in Richtung des Bodenteils gepresst werden kann. Die Abzweigleitung kann bei der Kontaktierung in eine Aufnahme zwischen dem isolierenden Einschub und dem Deckelteil mit Hebelelement eingelegt sein. Die Abzweigleitung kann auch bereits fest mit dem Deckelteil der Verbindungsdose verbunden sein, sodass die Abzweigleitung nicht erst in die Verbindungsdose eingeführt werden muss, bevor das Hebelelement betätigt wird.

Die Verbindungsdose kann ein metallisches Kontaktelement aufweisen, welches mit zwei oder mehr Kontaktmesser die Ader der Durchgangsleitung kontaktiert, wobei sich eine Klemmenschiene einstückig an die Kontaktmesser anschließt, um einen elektrischen Kontakt mit einer in die Verbindungsdose eingeführten Abzweigleitung herzustellen. Die wenigstens zwei Kontaktmesser können dabei hintereinander an der Klemmenschiene angeordnet sein. Die Klemmenschiene kann sich bis hin zu einer Aufnahme für eine Litze der Abzweigleitung erstrecken, um diese Litze elektrisch mit den Kontaktmessern und somit mit dem Rundkabel der Durchgangsleitung zu verbinden. Die Litze der Abzweigleitung kann in die Aufnahme der Verbindungsdose eingeführt werden, bevor diese fixiert wird, oder sie kann bereits in Kontakt mit der Klemmenschiene fixiert sein. Die Aufnahme in der Verbindungsdose kann somit die Aufnahme einer Kabelklemme sein.

Das Abzweiggehäuse kann Dichtungen, vorzugsweise Gummidichtungen, im Bereich des der Eingänge, der Ausgänge und der Abgänge aufweisen.

Das Abzweiggehäuse ist beispielsweise wenigstens zweiteilig aufgebaut, wobei ein Teil des Abzweiggehäuses als Deckel ausgestaltet ist. In manchen Ausführungsformen bilden die Dichtelemente des ersten Teils des Abzweiggehäuses z.B. eines Bodenteils und Dichtelemente des zweiten Teils des Abzweiggehäuses, vorzugsweise des Deckels oder eines Zwischenteils, miteinander die Dichtungen im Bereich der Eingänge und Ausgänge des Abzweiggehäuses. Die (deckelseitigen bzw. zwischenteilseitigen und bodenteilseitigen) Dichtelemente werden beim Abschließen des Gehäuses durch Aufsetzen und Fixieren des Deckels bzw. des Zwischenteils an dem Abzweiggehäuses zusammengepresst und an die in das Abzweiggehäuse eintretende und von dem Abzweiggehäuse austretende Rundkabel gepresst.

Das gesamte Abzweiggehäuse ist so beispielsweise derart ausgestaltet, dass es eine Dichtheit gegenüber Wasser bzw. Staub der Klasse IP20, IP40 bzw. IP65 oder IP68 aufweist.

Das oben für einen Anschluss an eine Ladestation ("Vallbox") beschrieben Kabelanschlusssystem kann ebenso für die Versorgung von Tunnelventilatoren, Tunnelbeleuchtungen oder andere Anwendungen vorgesehen sein. Es sind auch brandsichere Ausgestaltungen der Abzweigdose möglich. Zwischen der Durchgangsleitung und den Abzweigleitungen können Sicherungen (beispielsweise Schmelzsicherungen) vorgesehen sein.

Gemäß einem zweiten Aspekt wird eine Ladestationsinstallation zum Laden einer Batterie von Elektrofahrzeugen bereitgestellt. Die Ladestationsinstallation umfasst: eine Durchgangsleitung, mehrere Ladestationen für die Elektrofahrzeuge, mehrere entlang der Durchgangsleitung angeordnete Kabelanschlusssysteme gemäß dem oben beschrieben ersten Aspekt, die jeweils eine der Ladestationen elektrisch mit der Durchgangsleitung verbindet.

Gemäß einem dritten Aspekt wird ein Installationssatz für eine Ladestationsinstallation zum Laden der Batterie von Elektrofahrzeugen bereitgestellt. Der Installationssatz umfasst mehrere Ladestationen zum Laden von Elektrofahrzeugen, eine Leitung, die in Bezug auf ihre Strombelastung als Durchgangsleitung für mehrere anzuschließende Ladestationen dimensioniert ist, und mehrere Kabelanschlusssysteme gemäß dem ersten Aspekt, zur abisolierfreien Kontaktierung der Durchgangsleitung an mehreren Stellen, um die entlang der Durchgangsleitung angeordneten Ladestationen elektrisch mit der Durchgangsleitung zu verbinden.

### KURZE BESCHREIBUNG DER ZEICHNUNG

Die Zeichnung dient der Veranschaulichung des oben beschriebenen Kabelanschlusssystems, der oben beschriebenen Ladestationsinstallation und Installationssatz durch Ausführungsbeispiele. In der Zeichnung zeigen:
- Fig. 1 eine schematische Abbildung eines Beispiels eines Abzweiggehäuses mit Anschlüssen für Rundkabel einer Durchgangsleitung und Abgängen für die zugehörige Abzweigleitungen,
- Fig. 2 eine schematische Abbildung eines Beispiels mehrerer Abzweiggehäuse aus Fig. 1, zu welchen die Rundkabel der Durchgangsleitung mittels eines beispielhaft dargestellten Kabelkabelkanals hingeführt werden und von welchem die Rundkabel der Durchgangsleitung ebenso von einem Kabelkanal weggeführt werden, wobei an jedes Abzweiggehäuse je eine Ladestation für ein Elektroauto angeschlossen ist,
- Fig. 3 eine schematische Abbildung von einem Beispiel für in den Kabelkanal der Fig. 2 eingesetzten Abstandshaltern samt Kabelkanal,
- Fig. 4A eine schematische Abbildung eines Beispiels für eine Kontaktierung von fünf Rundkabel einer Durchgangsleitung durch eine erste Ausführungsform einer Verbindungsdose, wobei die gleichzeitige Kontaktierung sowohl eines Rundkabel der Durchgangsleitung als auch einer zugehörigen Abzweigleitung über ein metallisches Kontaktelement mit zwei unterschiedlichen Sätzen von Durchdringungskontaktelementen erfolgt, wobei das metallische Kontaktelement zwischen dem Rundkabel der Durchgangsleitung und der Abzweigleitung angeordnet ist,
- Fig. 4B zeigt schematisch ein Beispiel für eine Kontaktierung von fünf Rundkabel einer Durchgangsleitung durch eine zweite Ausführungsform einer Verbindungsdose, wobei die gleichzeitige Kontaktierung sowohl eines Rundkabel der Durchgangsleitung als auch einer zugehörigen Abzweigleitung über ein einzelnes Kontaktmesser erfolgt,

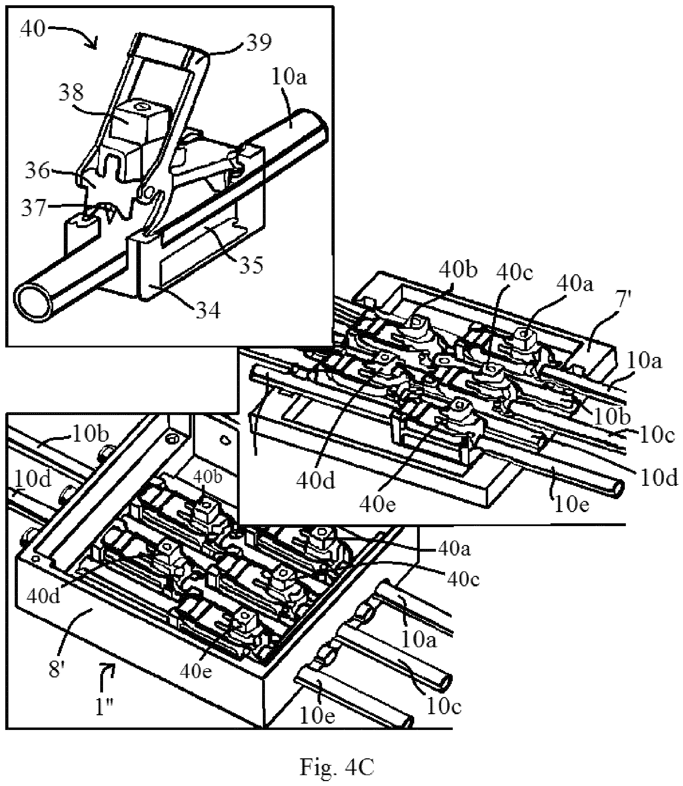

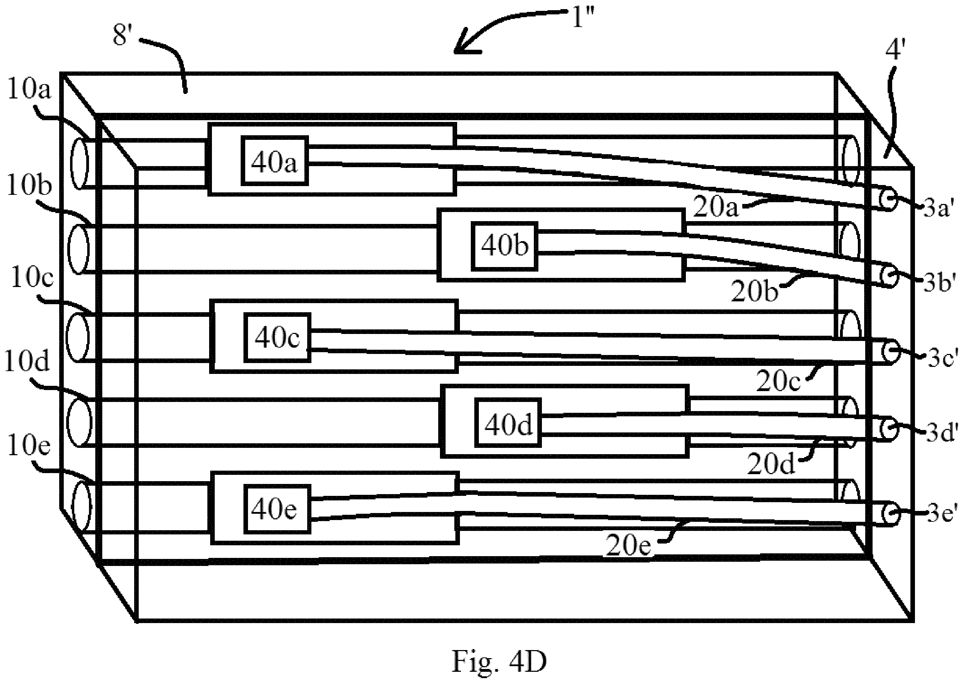

- Fig. 4C zeigt schematisch ein Beispiel für eine Kontaktierung von fünf Rundkabel einer Durchgangsleitung durch eine dritte Ausführungsform einer Verbindungsdose, wobei ein Rundkabel der Durchgangsleitung von wenigstens einem Kontaktmesser kontaktiert wird, wobei das Kontaktmesser mit einer Kabelklemme für eine Abzweigleitung verbunden ist, Fig. 4D zeigt schematisch ein Beispiel eines Abzweiggehäuses mit darin eingesetzten Verbindungsdosen gemäß Fig. 4C, wobei die Abzweigleitungen einerseits fest mit Abgängen für die Abzweigleitungen in einem Deckelteil des Abzweiggehäuses verbunden sind und andererseits fest mit der Kabelklemme der jeweiligen Verbindungsdose gekoppelt sind,
- Fig. 5 zeigt schematisch ein Beispiel für eine Verbindung von fünf Rundkabeln einer Durchgangsleitung mit zugehörigen Abzweigleitungen hergestellt durch fünf Verbindungsdosen wie in Fig. 4A dargestellt,
- Fig. 6 zeigt schematisch ein Beispiel für einen mehrteiligen Aufbau eines Abzweiggehäuses wie in Fig. 1, mit Dichtungen, die in einen Bodenteil und in ein Zwischenteil des Abzweiggehäuses eingesetzt sind, um die Rundkabel der Durchgangsleitung bei Eintritt in das Abzweiggehäuse und bei Austritt aus dem Abzweiggehäuse dichtend umschließen,
- Fig. 7 zeigt schematisch eine Großdarstellung der in Fig. 4B dargestellten zweiten Ausführungsform einer Verbindungsdose,
- Fig. 8A zeigt schematisch eine Detaildarstellung der dritten Ausführungsform einer Verbindungsdose (Fig. 4C) im geschlossenen Zustand,
- Fig. 8B zeigt schematisch ein Beispiel für eine Klemmenschiene mit zwei Kontaktmessern, die in der in Fig. 8A dargestellten Verbindungsdose eingesetzt wird,
- Fig. 8C zeigt schematisch ein Beispiel für eine Schnittdarstellung der in Fig. 8A dargestellten Verbindungsdose im geschlossenen Zustand;

### BESCHREIBUNG VON AUSFÜHRUNGSBEISPIELEN ANHAND DER ZEICHNUNG

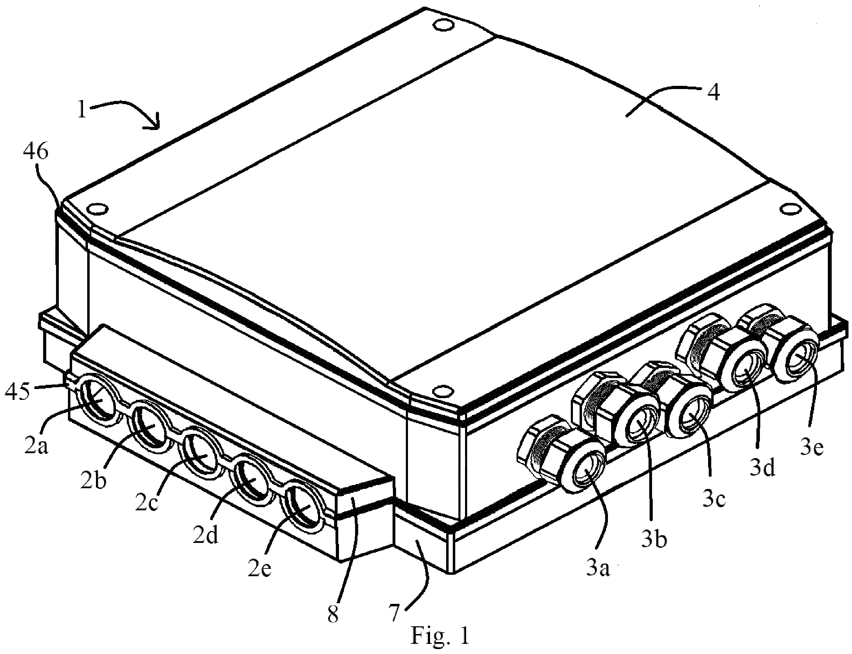

Eine schematische Abbildung eines Beispiels eines Abzweiggehäuses mit Anschlüssen für Rundkabel einer Durchgangsleitung und Abgängen für zugehörige Abzweigleitungen ist in **Fig. 1** gezeigt.

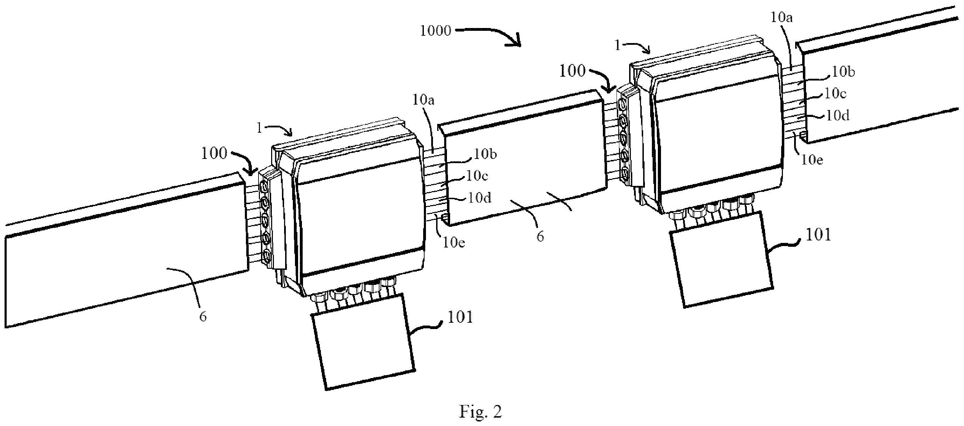

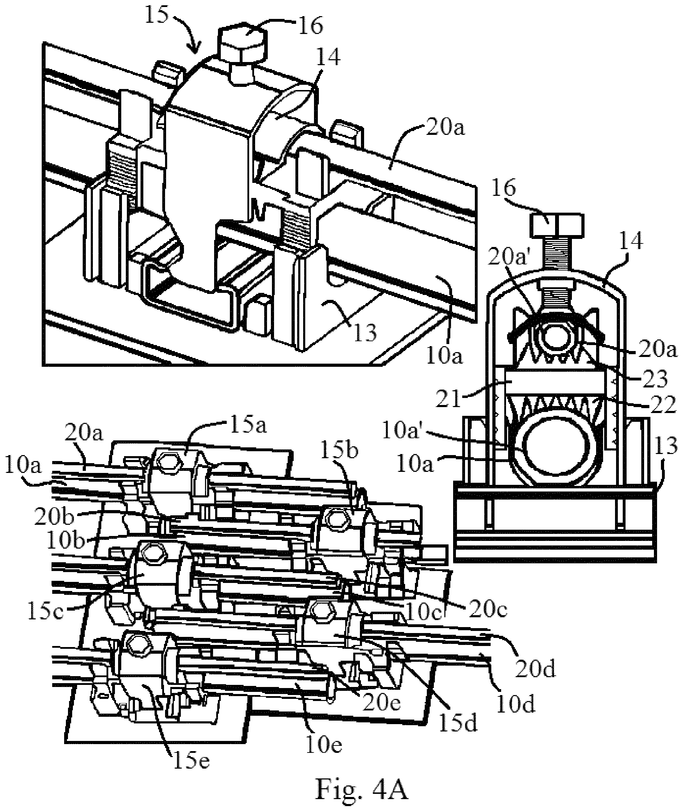

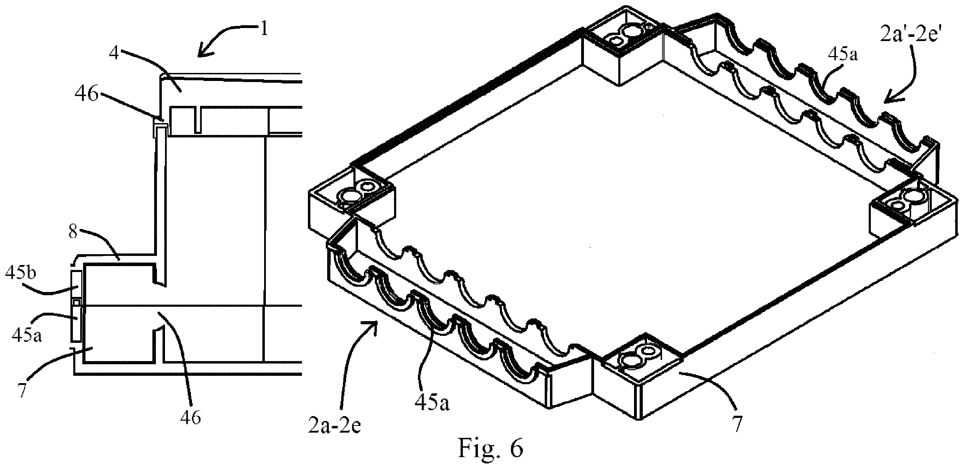

Das Abzweiggehäuse 1 gemäß diesem Ausführungsbeispiel ist mehrteilig aufgebaut: Ein Bodenteil 7 und ein Zwischenteil 8 umschließen gemeinsam Eingänge 2a bis 2e und Ausgänge (siehe z.B. Fig. 6) für die Rundkabel der Durchgangsleitung (siehe z.B. Fig. 2, Fig. 4A bis Fig. 4B). Der Zwischenteil 8 ist zwischen dem Bodenteil 7 und einem Deckelteil 4 des Abzweiggehäuses 1 angeordnet. Die drei Teile (Bodenteil 7, Zwischenteil 8, Deckelteil 4) des Abzweiggehäuses 1 sind im abgeschlossenen Zustand des Abzweiggehäuses 1 dichtend miteinander verbunden.

Der Bereich der Eingänge 2a-2e ist mit einer zweiteilig aufgebauten Dichtung 45 versehen um die Eingänge versehen. Dasselbe gilt für die in Fig. 1 nicht dargestellten Ausgänge (siehe Fig. 6). An der Verbindungsstelle des Deckelteils 4 mit dem Zwischenteil 8 ist ebenso eine Dichtung 46 vorgesehen. Ein Querschnitt der zweiteiligen Dichtung 45 und ebenso der Dichtung 46 ist in Fig. 6 gezeigt. Die Dichtungen 45 und 46 des Abzweiggehäuses 1 dienen dazu, das Abzweiggehäuse bei eingesetzten Rundkabeln der Durchgangsleitung dicht gegen Flüssigkeiten und Staub, beispielsweise im Rahmen der Klasse IP20, IP40 bzw. IP65 oder IP68 aufweist, abzuschließen.

Das Abzweiggehäuse umfasst ebenso Abgänge 3a-3e für die Abzweigleitungen. Diese Abgänge 3a-3e sind in dem Ausführungsbeispiel gemäß Fig. 1 im rechten Winkel zu den Eingängen 2a-2e für die Rundkabel der Durchgangsleitung angeordnet. Die Abgänge 3a-3e für die Abzweigleitungen befinden sich auf dem Zwischenteil 8 des Abzweiggehäuses 1, sind also höher an dem Abzweiggehäuse angeordnet als die Eingänge 2a-2e für die Durchgangsleitung.

Fig. 2 eine schematische Abbildung eines Beispiels mehrerer Abzweiggehäuse aus Fig. 1, zu welchen die Rundkabel der Durchgangsleitung mittels eines beispielhaft dargestellten Kabelkabelkanals hingeführt werden und von welchem die Rundkabel der Durchgangsleitung ebenso von einem Kabelkanal weggeführt werden, wobei an jedes Abzweiggehäuse je eine Ladestation für ein Elektroauto angeschlossen ist, ist schematisch in **Fig. 2** dargestellt.

Der Kabelkanal 6 führt die Rundkabel 10a-10e der Durchgangsleitung 100 zu dem Abzweiggehäuse 1 (siehe Fig. 1 für Details) hin, und von diesem weg. Die Rundkabel 10a-10e werden dabei parallel zueinander und übereinander beabstandet zueinander entlang des Kabelkanals 6 geführt. So können Kurzschlüsse zwischen den Rundkabeln vermieden werden. Die Rundkabel 10a-10c können als Phasenleiter ausgestaltet sein, während das Rundkabel 10d als Neutralleiter ausgestaltet sein kann und das Rundkabel 10e als Schutzleiter (PE).

An die zwei dargestellten Abzweiggehäuse 1 sind hier nur stilisiert dargestellte Wandladestationen 101 ("Wallbox") angeschlossen.

Die Durchgangsleitung 100, die Abzweiggehäuse 1 und die Wandladestationen 101 bilden miteinander die Ladestationsinstallation 1000.

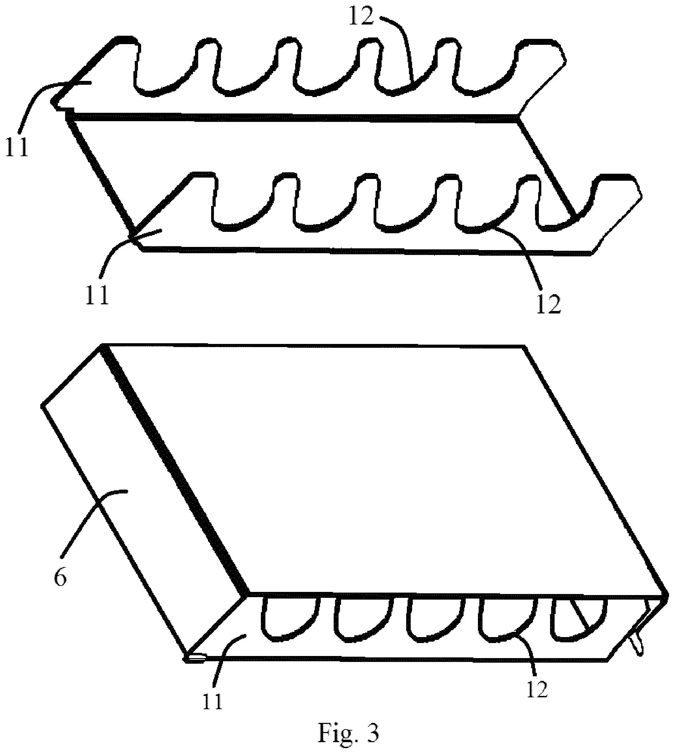

Ein Beispiel für in den Kabelkanal der Fig. 2 eingesetzte Abstandshalter für die Rundkabel, auch im Verbund mit dem Kabelkanal sind schematisch in **Fig. 3** dargestellt.

Die Abstandshalter 11 sind beispielsweise in regelmäßigen Abständen (z.B. ein Meter, zwei Meter etc.) hintereinander eingesetzt. Die als aus Kunststoff gefertigten Profilteile ausgestalteten Abstandshalter 11 weisen dabei Auflageflächen (Kerben) 12 auf, in denen die Rundkabel 10a-10e der Durchgangsleitung (siehe z.B. Fig. 2, Fig. 4A-4C) parallel zueinander aufliegen und so parallel entlang des Kabelkanals 6 geführt werden.

Die Abstandshalter 11 sind, wie oben erwähnt, beispielsweise als Profilteile aus Kunststoff gefertigt und können insbesondere einstückig ausgestaltet sein. Der Kabelkanal 6 kann offen oder geschlossen ausgestaltet sein.

Ein Beispiel für eine Anordnung zur Kontaktierung von fünf Rundkabel einer Durchgangsleitung durch eine erste Ausführungsform einer Verbindungsdose, wobei die gleichzeitige Kontaktierung sowohl eines Rundkabel der Durchgangsleitung als auch einer zugehörigen Abzweigleitung über ein metallisches Kontaktelement mit zwei unterschiedlichen Sätzen von Durchdringungskontaktelementen erfolgt, wobei das metallische Kontaktelement zwischen dem Rundkabel der Durchgangsleitung und der Abzweigleitung angeordnet ist, ist schematisch in **Fig. 4A** dargestellt.

Das in Fig. 4A dargestellte Beispiel einer Verbindungsdose 15 ist wenigstens aus zwei Isolierkörpern (Bodenteil 13, Deckelteil 14) aufgebaut, die (z.B. positionsvariabel) ineinandergreifen. Die Verbindungsdose 15 dient dazu, ein Rundkabel 10a je mit einer zugehörigen Abzweigleitung 20a zu verbinden.

Das Rundkabel 10a wird durch den Bodenteil 13 der Verbindungsdose 15 geführt und liegt mit seiner Unterseite auf diesem Bodenteil 13 bzw. an einer Auflagefläche dieses Bodenteils 13 auf. An der Oberseite des Rundkabels 10a ist das metallische Kontaktelement 21 angeordnet, dessen untere Durchdringungskontaktelemente 22 (erster Satz von Durchdringungskontaktelementen) in Richtung der Oberseite des Rundkabels 10a zeigen. Die in den Deckelteil 14 eingelegte Abzweigleitung 20a liegt mit seiner Unterseite auf den oberen Durchdringungskontaktelemente 23 (zweiter Satz von Durchdringungskontaktelementen) des metallischen Kontaktelements 21 auf. Der Deckelteil 14 und der Bodenteil 13 sind beispielsweise aus Kunststoff gefertigt.

Wie Fig. 4A entnommen werden kann, weist der erste Satz von Durchdringungskontaktelementen (obere Durchdringungskontaktelemente 23) weniger einzelne Schneidelemente bzw. Dornen auf als der zweite Satz von Durchdringungskontaktelementen 22 (untere Durchdringungskontaktelemente), da über die Abzweigleitung 20a geringere Ströme fließen als über das Rundkabel der Durchgangsleitung 10a, da die Anzapfstellen an der Durchgangsleitung insgesamt auf höhere Ströme ausgelegt sind und daher eine größere Kontaktfläche zwischen metallischem Kontaktelement 21 und Rundkabel 10a der Durchgangsleitung vorgesehen ist als für die Abzweigleitung 20a.

Eine Schraubklemmenanordnung 16, als Beispiel für eine Klemmenanordnung, fixiert das in den Deckelteil 14 eingelegte Abzweigleitung 20a und kann dazu verwendet werden, um das Abzweigleitung 20a in Richtung des metallischen Kontaktelements 21 und somit in Richtung des in das Bodenteil 13 eingelegten Rundkabels 10a zu pressen.

Wenn durch die Schraubklemmenanordnung Druck in Richtung des Bodenteils 13 und des Rundkabels 10a ausgeübt wird, kontaktieren die oberen Durchdringungskontaktelementen 23 des metallischen Kontaktelements 21 den Aderleiter 20a' der Abzweigleitung 20a. Somit wird das Abzweigleitung 20a abisolierfrei kontaktiert. Ebenso wird dabei der Aderleiter 10a' des Rundkabels 10a von den unteren Durchdringungskontaktelementen 22 des metallischen Kontaktelements 21 kontaktiert. Somit wird auch das Rundkabel 10a der Durchgangsleitung abisolierfrei kontaktiert. Das metallische Kontaktelement 21 stellt somit eine elektrische Verbindung zwischen dem Rundkabel 10a der Durchgangsleitung und der Abzweigleitung 10a her.

In die Abzweigdose 1 (siehe z.B. Fig. 1, Fig. 2, Fig. 6) sind beispielsweise fünf Verbindungsdosen 15a bis 15e (z.B. nebeneinander) eingesetzt, um fünf Rundkabel 10a-10e der Durchgangsleitung 100 (siehe Fig. 2) mit fünf Abzweigleitung 20a-20e bei Fixierung der Schraubklemmenanordnungen 16 der Verbindungsdosen 15a bis 15e zu verbinden. Die Verbindungsdosen 15a bis 15e sind dabei aufgebaut wie die hier dargestellte Verbindungsdose 15.

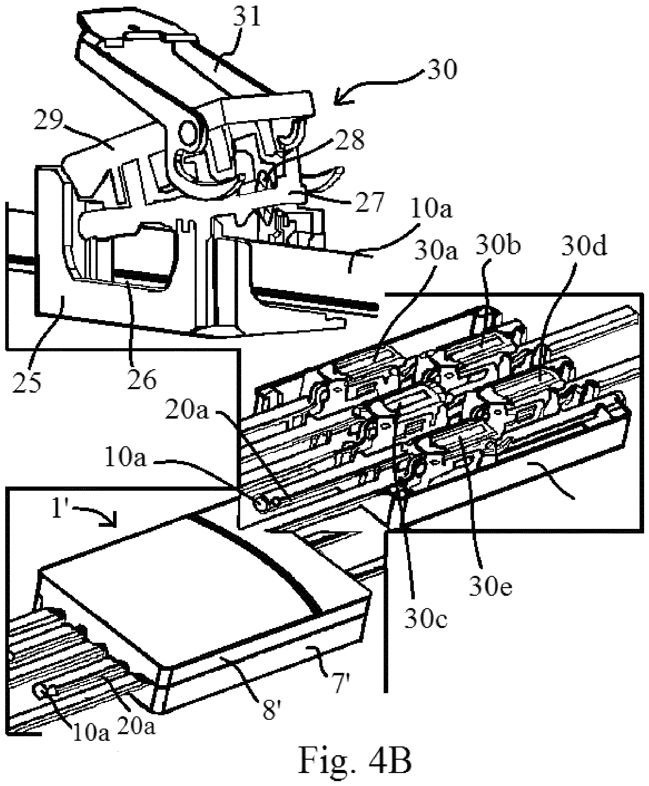

Ein Beispiel für eine Anordnung zur Kontaktierung von fünf Rundkabel einer Durchgangsleitung durch eine zweite Ausführungsform einer Verbindungsdose, wobei die gleichzeitige Kontaktierung sowohl eines Rundkabel der Durchgangsleitung als auch einer zugehörigen Abzweigleitung über ein einzelnes Kontaktmesser erfolgt, ist schematisch in **Fig. 4B** gezeigt.

Die in Fig. 4B als Beispiel gezeigte Verbindungsdose 30 weist z.B. einen dreiteiligen Aufbau auf. Das Rundkabel 10a der Durchgangsleitung 100 (siehe Fig. 2) hat einen Bodenteil 25 mit einer Auflagefläche 26 auf dem das Rundkabel 10a aufliegt. Das Rundkabel 10a wird durch das Bodenteil 25 und somit durch die Verbindungsdose 30 geführt. In den Bodenteil 25 der Verbindungsdose 30 ist ein isolierender Einschub 27 eingesetzt von dem aus sich ein Kontaktmesser 28 sowohl in Richtung des Bodenteils 25 bzw. der Auflagefläche 26 (also in Richtung des durchgeführten Rundkabels), als auch in Richtung eines Deckelteils 29 der Verbindungsdose 30 erstreckt, wobei eine Abzweigleitung 20a zwischen dem Deckelteil 29 und dem isolierenden Einschub 28 aufgenommen werden kann. Der Bodenteil 25, der isolierende Einschub 27 und der Deckelteil 29 sind beispielsweise aus Kunststoff gefertigt.

Beispielsweise ist an dem Deckelteil 29 (oder an anderer Stelle der Verbindungsdose 30) ist ein Hebelelement 31 montiert, mit dem der Deckelteil in Richtung des Bodenteils 25 (bzw. dessen Auflagefläche 26) und somit in Richtung des Rundkabels 10a der Durchgangsleitung gepresst wird. Dabei wird sowohl eine zwischen isolierendem Einschub 27 und Deckelteil 29 eingelegte Abzweigleitung 20a als auch das durch den Bodenteil 25 geführte Rundkabel 10a von dem Kontaktmesser 28 abisolierfrei kontaktiert. Das (metallische) Kontaktmesser 28 stellt somit eine elektrische Verbindung zwischen dem Rundkabel 10a der Durchgangsleitung und der Abzweigleitung 10a her.

Fünf Verbindungsdosen dieser Art 30a-30e sind vorgesehen um beispielsweise fünf Rundkabel 10a-10e einer Durchgangsleitung mit fünf Abzweigleitungen 20a-20e zu verbinden und zu diesem Zweck in ein Abzweiggehäuse 1' eingesetzt. Wie in Fig. 4B gezeigt, werden in diesem Ausführungsbeispiel die Abzweigleitungen parallel zu den Rundkabeln der Durchgangsleitung aus dem Abzweiggehäuse 1' geführt. Die Abgänge für die Abzweigleitungen sind also in diesem Abzweiggehäuse 1' anders als im Abzweiggehäuse 1 (siehe Fig. 1) nicht im rechten Winkel zu den Eingängen bzw. Ausgängen für die Rundkabel der Durchgangsleitung angeordnet, sondern auf derselben Seite des Abzweiggehäuses 1', im Wesentlichen parallel zu den Eingängen bzw. Ausgängen des Abzweiggehäuses 1'.

Ein Beispiel für eine Anordnung zur Kontaktierung von fünf Rundkabel einer Durchgangsleitung durch eine dritte Ausführungsform einer Verbindungsdose, wobei ein Rundkabel der Durchgangsleitung von wenigstens einem Kontaktmesser kontaktiert wird, wobei das Kontaktmesser mit einer Kabelklemme für eine Abzweigleitung verbunden ist, ist schematisch in **Fig. 4C** gezeigt.

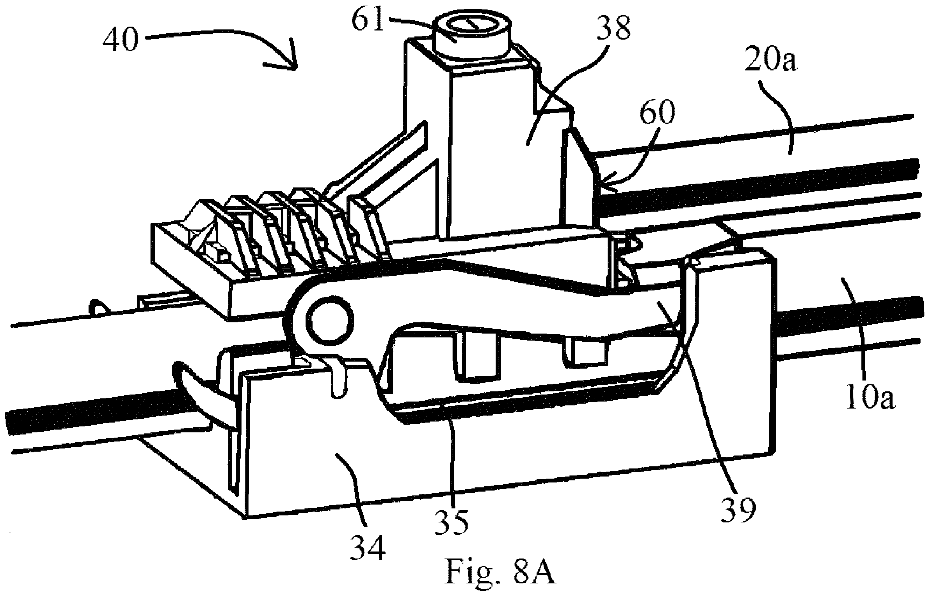

Die Verbindungsdose 40, genauer auch in den Fig. 8A-C gezeigt, kontaktiert ein Rundkabel 10a der Durchgangsleitung 100 (siehe Fig. 2), das auf einer Auflagefläche 35 eines Bodenteils 34 der Verbindungsdose 40 aufliegt und durch das Bodenteil 34 geführt ist, mittels eines Kontaktmessers 37.

Das Kontaktmesser 37 ist dabei in einen Isolierkörper 36 eingesetzt. Das Kontaktmesser 37 ist mit einer Kabelklemme 38 verbunden, in die ein Aderleiter 20a' (Litze) einer Abzweigleitung 20a eingeführt werden kann und dort fixiert werden kann um eine elektrische Verbindung mit dem Kontaktmesser 37 und somit mit dem Rundkabel 10a der Durchgangsleitung 100 (siehe Fig. 2) herzustellen. Das Kontaktmesser 37 kann mittels eines Hebelelements 39 in Richtung des Bodenteils 34 bzw. dessen Auflagefläche 35 und somit in Richtung des dort eingelegten Rundkabels 10a gepresst werden, um das Rundkabel 10a abisolierfrei zu kontaktieren und elektrisch mit der Kabelklemme 38 zu verbinden.

Fünf Verbindungsdosen 40a-40e sind in ein Abzweiggehäuse 1" eingesetzt um dort fünf Rundkabel 10a-10e zu kontaktieren und so mit den Kabelklemmen der Verbindungsdosen 40a-40e zu verbinden. Dabei sind die Rundkabel zwischen einem Bodenteil 7' und einem Zwischenteil 8' des Abzweiggehäuses 1" durchgeführt, wobei der Zwischenteil 8' wie in Fig. 1 auf das Bodenteil 8' aufgesetzt ist.

Wie in **Fig. 4D** gezeigt, können die Abzweigleitungen können dabei in ein Deckelteil des Abzweiggehäuses 1" fix eingesetzt sein um mit den Kabelklemmen 28 (siehe Fig. 4C) der Verbindungsdosen 40a-40e verbunden zu werden, wobei die Abzweigleitungen bereits fix mit den Abgängen für die Abzweigleitungen in dem Deckelteil verbunden sind.

Der Deckelteil 4' ist in der Darstellung gemäß Fig. 4D bereits auf einen anderen Teil des Abzweiggehäuses 1", wie dem Zwischenteil 8' aufgesetzt. Innerhalb des Deckelteils 4" sind die Abzweigleitungen 20a-20e bereits fest mit zugehörigen Abgängen 3a'-3e' für die Abzweigleitungen verbunden.

Bei der Installation (die in der Darstellung gemäß Fig. 4D bereits erfolgt ist), müssen lediglich die einzelnen Abzweigleitungen 20a-20e in den Kabelklemmen 38 (siehe z.B. Fig. 8D) mit den Verbindungsdosen 40a-40e fixiert werden um die Verbindung mit den durch die Verbindungsdosen 40a-40e bereits (beispielsweise über einem einzigen Hebelruck pro Verbindungsdose) abisolierfrei kontaktierten Rundkabel 10a-10e der Durchgangsleitung herzustellen.

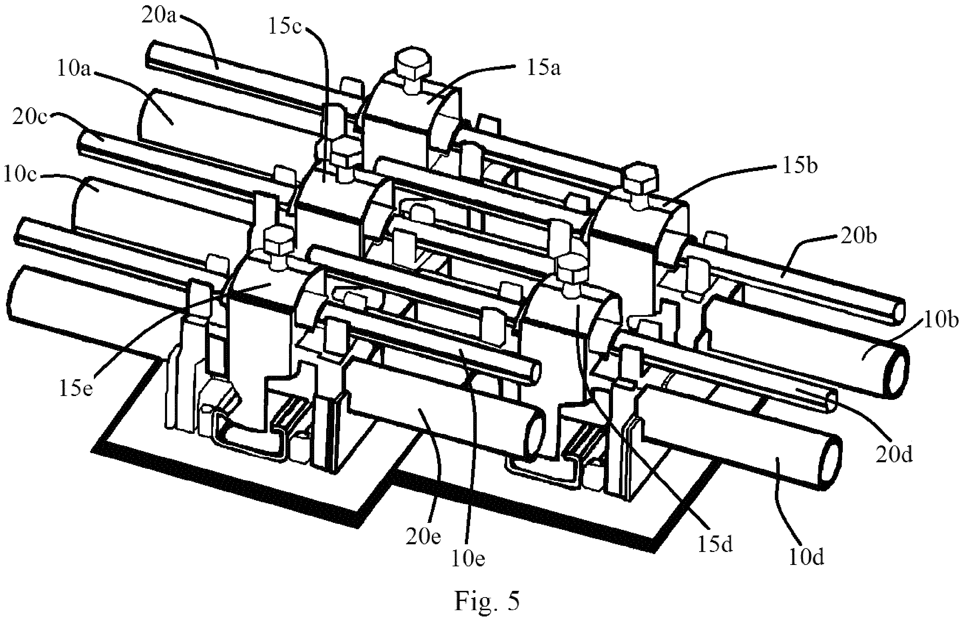

Ein Beispiel für eine Verbindung von fünf Rundkabeln einer Durchgangsleitung mit zugehörigen Abzweigleitungen hergestellt durch fünf Verbindungsdosen wie in Fig. 4A dargestellt, ist schematisch in **Fig. 5** vergrößert dargestellt.

Die Verbindungsdosen 15 (gemäß der ersten Ausführungsform) verbinden hier fünf Rundkabel 10a-10e einer Durchgangsleitung 100 (siehe Fig. 2) mit jeweils zugehörigen fünf Abzweigleitungen 20a-20e. Die in Fig. 5 gezeigt Anordnung ist beispielsweise in ein Abzweiggehäuse 1 (siehe Fig. 1) eingesetzt.

Ein Beispiel für einen mehrteiligen Aufbau eines Abzweiggehäuses wie in Fig. 1, mit Dichtungen, die in einen Bodenteil und in ein Zwischenteil des Abzweiggehäuses eingesetzt sind, um die Rundkabel der Durchgangsleitung bei Eintritt in das Abzweiggehäuse und bei Austritt aus dem Abzweiggehäuse dichtend umschließen, ist schematisch in **Fig. 6** gezeigt.

Wie bereits in Fig. 1 gezeigt, ist das Abzweiggehäuse 1 wenigstens dreiteilig aufgebaut: es hat einen Bodenteil 7, einen Zwischenteil 8 und einen Deckelteil 4. In die Eingänge 2a-2e sind dabei eine zweiteilige Dichtung 45 eingesetzt (siehe Fig. 1).

Diese Dichtung umfasst Dichtelemente 45a im Bereich des Bodenteils und Dichtelemente 45b im Bereich des Zwischenteils 8, wobei die bodenteilseitigen Dichtelemente 45a und die zwischenteilseitigen Dichtelemente 45b beim Aufsetzen des Zwischenteils 8 auf den Bodenteil 7 aneinander fügbar sind die durch die Eingänge 2a-2e und Ausgänge 2a'-2e' geführten Rundkabel einer Durchgangsleitung zwischen die jeweiligen Dichtelemente 45a, 45b zu klemmen. Die Dichtung 45 und die einzelnen Dichtelemente 45a, 45b sind beispielsweise als Gummidichtungen vorgesehen. Hinter den Dichtungen ist ein Eintritt 46 für die jeweiligen Rundkabel in das Abzweiggehäuse 1 vorgesehen.

Ebenso im Bereich des Deckelteils 4 (hierin auch als Deckel bezeichnet) ist eine Dichtung 46 dort vorgesehen, wo der Deckelteil 4 auf das Zwischenteil 8 aufgesetzt wird. Diese Dichtung 46 des Deckelteils 4 kann ebenso als Gummidichtung, oder aber auch als Labyrinthdichtung ausgestaltet sein.

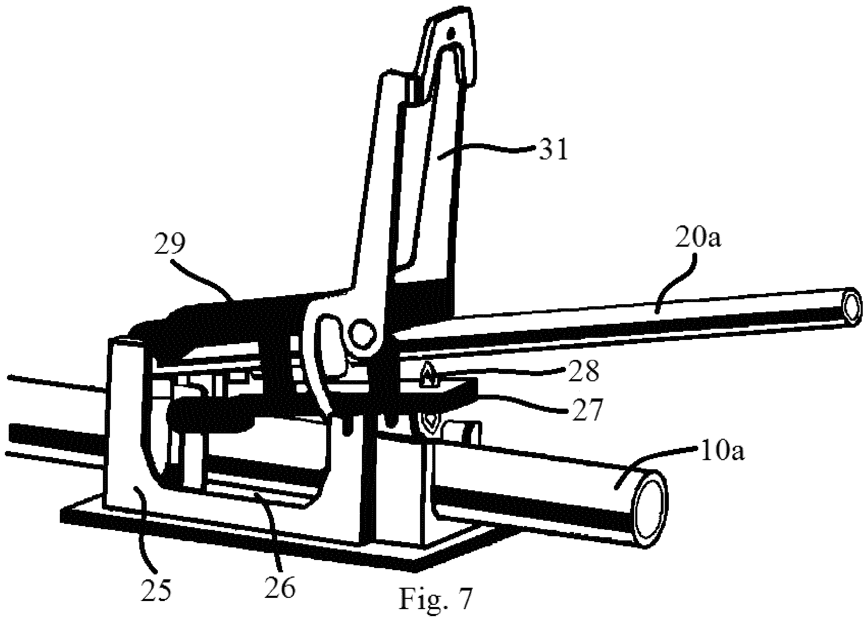

Ein Beispiel einer schematischen Großdarstellung der in Fig. 4B abgebildeten zweiten Ausführungsform einer Verbindungsdose ist in **Fig. 7** dargestellt.

Die in Fig. 7 beispielhaft gezeigte Verbindungsdose 30 weist z.B. einen dreiteiligen Aufbau auf. Das Rundkabel 10a der Durchgangsleitung 100 (siehe Fig. 2) hat einen Bodenteil 25 mit einer Auflagefläche 26 auf dem das Rundkabel 10a aufliegt. Das Rundkabel 10a wird durch das Bodenteil 25 und somit durch die Verbindungsdose 30 geführt. In das Bodenteil 25 der Verbindungsdose 30 ist ein isolierender Einschub 27 eingesetzt von dem aus sich ein Kontaktmesser 28 sowohl in Richtung des Bodenteils 25 bzw. der Auflagefläche 26 (also in Richtung des durchgeführten Rundkabels), als auch in Richtung eines Deckelteils 29 der Verbindungsdose 30 erstreckt, wobei eine Abzweigleitung 20a zwischen dem Deckelteil 29 und dem isolierenden Einschub 27 aufgenommen werden kann.

Beispielsweise ist an dem Deckelteil 29 (oder an anderer Stelle der Verbindungsdose 30) ist ein Hebelelement 31 montiert, mit dem der Deckelteil in Richtung des Bodenteils 25 (bzw. dessen Auflagefläche) gepresst wird. Dabei wird sowohl eine zwischen isolierendem Einschub 27 und Deckelteil 29 eingelegte Abzweigleitung 20a als auch das durch den Bodenteil 25 geführte Rundkabel 10a von dem Kontaktmesser 28 abisolierfrei kontaktiert. Das Kontaktmesser 28 stellt somit eine elektrische Verbindung zwischen dem Rundkabel 10a der Durchgangsleitung und der Abzweigleitung 20a her.

Ein Beispiel für eine Detaildarstellung der Verbindungsdose der Fig. 4C im geschlossenen Zustand ist in **Fig. 8A** gezeigt.

Die Verbindungsdose 40 kontaktiert ein Rundkabel 10a der Durchgangsleitung 100 (siehe Fig. 2), das auf einer Auflagefläche 35 eines Bodenteils 34 der Verbindungsdose 40 aufliegt und durch das Bodenteil 34 geführt ist mittels eines Kontaktmessers 37 (siehe Fig. 4C).

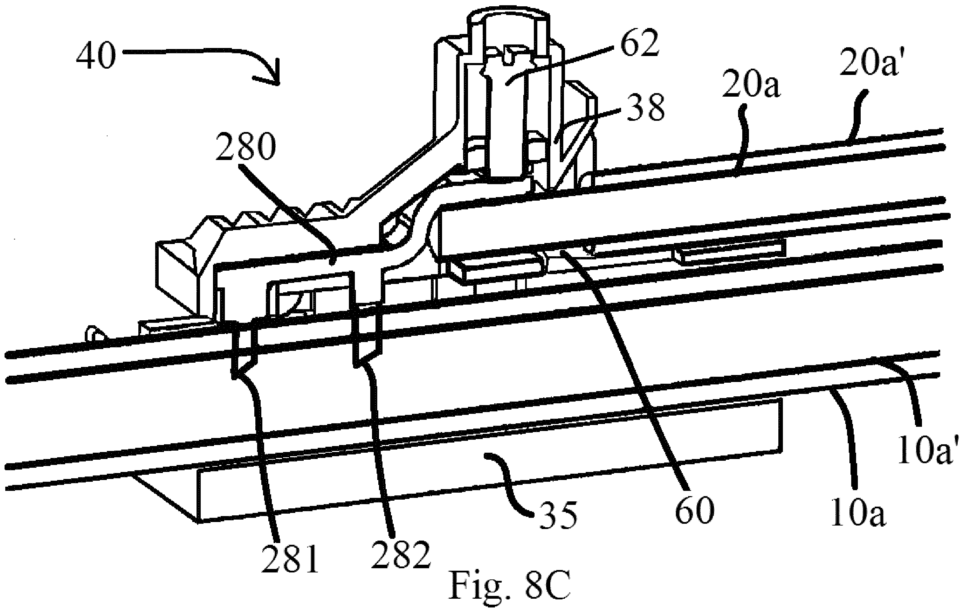

Das Kontaktmesser 37 (siehe Fig. 4C) ist dabei in einen Isolierkörper 36 eingesetzt. Das Kontaktmesser 37 (siehe Fig. 4C) ist mit einer Kabelklemme 38 verbunden, in die ein Aderleiter 20a' (Litze) einer Abzweigleitung 20a eingeführt werden kann und dort mittels einer Schraube 62 (siehe Fig. 8C) im Schraubenkanal 61 fixiert werden kann um eine elektrische Verbindung mit dem Kontaktmesser 37 und somit mit dem Rundkabel 10a der Durchgangsleitung 100 (siehe Fig. 2) herzustellen. Das Kontaktmesser 37 kann mittels eines Hebelelements 39 in Richtung des Bodenteils 34 bzw. dessen Auflagefläche 35 und somit in Richtung des dort eingelegten Rundkabels 10a gepresst werden, um das Rundkabel abisolierfrei zu kontaktieren und elektrisch mit der Kabelklemme 38 zu verbinden.

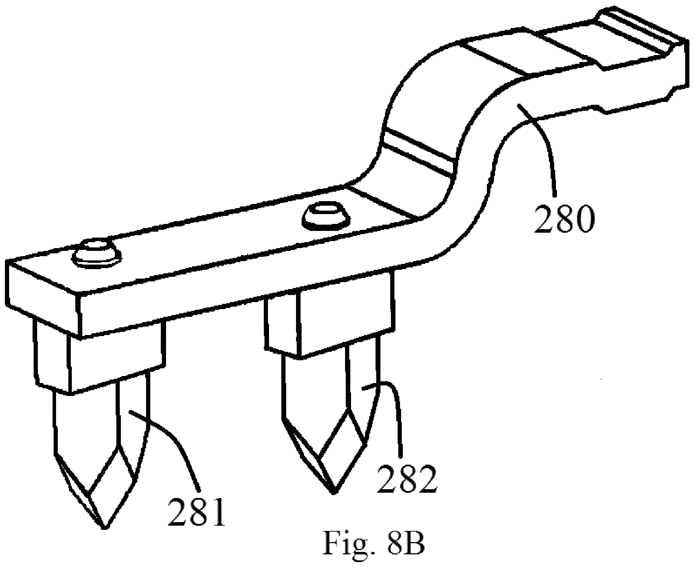

Ein Beispiel für eine Klemmenschiene mit zwei Kontaktmessern, die in der in Fig. 8A dargestellten Verbindungsdose eingesetzt wird, ist in **Fig. 8B** gezeigt.

Eine Klemmenschiene 280 hält an ihrem unteren und somit durchgangsleitungsseitig gelegenen Ende zwei Kontaktmesser 281, 282, die hintereinander in die Klemmenschiene 280 eingesetzt sind, um sich in Richtung des Rundkabels der Durchgangsleitung zu erstrecken.

Ein schematisches Beispiel für eine Schnittdarstellung der in Fig. 8A dargestellte Verbindungsdose im geschlossenen Zustand ist in **Fig. 8C** gezeigt.

Wie in Fig. 8C gezeigt, kontaktieren die beiden Durchdringungskontaktelemente (z.B. Kontaktmesser, Dornen etc.) 281 und 282 das Rundkabel 10a der Durchgangsleitung 100 (siehe Fig. 2) abisolierfrei, indem Sie in dessen Aderleiter 10a' schneiden. Das Rundkabel 10a liegt dabei auf der Auflagefläche 35 der Verbindungsdose 40 auf.

Der Aderleiter 20a' bzw. die Litze der Abzweigleitung 20a wird bei der Montage der Abzweigleitung 10a in eine Aufnahme 60 der Verbindungsdose 40 eingeführt und dort mittels der Schraube 62 innerhalb der Kabelklemme 38 an der Klemmenschiene 280 fixiert, welche die Kontaktmesser und somit das Rundkabel 10a der Durchgangsleitung elektrisch mit der Abzweigleitung 20a verbindet.

## Patentansprüche

1. Kabelanschlusssystem zum Verbinden einer Durchgangsleitung mit einer Ladestation, wobei das Kabelanschlusssystem umfasst:
mehrere Adern einer Durchgangsleitung, die als separate Rundkabel ausgeführt sind, wobei die Rundkabel der Durchgangsleitung in gleichbleibendem Abstand parallel zueinander geführt werden,
ein Abzweiggehäuse, wobei das Abzweiggehäuse mehrere Eingänge für je ein Rundkabel der Durchgangsleitung, sowie mehrere Ausgänge für je ein Rundkabel der Durchgangsleitung umfasst und,
wobei das Abzweiggehäuse mehrere Abgänge für Abzweigleitungen umfasst, die über die Abgänge mit der Ladestation verbindbar sind,
mehrere in das Abzweiggehäuse eingesetzte Verbindungsdosen, die über die Abgänge mit der Ladestation verbindbar sind,
wobei jeweils eine Verbindungsdose ein Rundkabel der Durchgangsleitung abisolierfrei kontaktiert,
wobei Durchdringungskontaktelemente für die abisolierfreie Kontaktierung vorgesehen sind, die dazu geeignet sind die Isolierung des jeweiligen Rundkabels zu durchringen und Kontakt mit dessen Leiter herzustellen,
wobei eine Verbindungsdose jeweils eine Abzweigleitung mit dem zugehörigen Rundkabel der Durchgangsleitung verbindet, wodurch jeweils eine Abzweigleitung innerhalb des Abzweiggehäuses zu einem zugehörigen Abgang für die Abzweigleitung verbunden ist.

2. Kabelanschlusssystem nach Anspruch 1, wobei die Rundkabel der Durchgangsleitung, durch hintereinander angeordnete Abstandshalter voneinander getrennt gehalten werden, wobei jeweils ein Rundkabel der Durchgangsleitung auf jeweils einer Auflagefläche eines Abstandshalters aufliegt, um die Adern der Durchgangsleitung parallel zueinander zu dem Abzweigleitungsgehäuse hin bzw. von dem Abzweigleitungsgehäuse weg zu führen.

3. Kabelanschlusssystem nach Anspruch 1 oder 2, wobei die Abstandshalter hintereinander beabstandet ein einen Kabelkanal eingesetzt sind, um die Rundkabel der Durchgangsleitung parallel entlang des Kabelkanals zu führen.

4. Kabelanschlusssystem nach einem der Ansprüche 1 bis 3, wobei das Abzweiggehäuse wenigstens teilweise aus Metall oder Kunststoff ausgeführt ist, wobei durch das Abzweiggehäuse die Kontaktstellen von Durchgangsleitung und Abzweigleitung mechanisch geschützt bzw. elektromagnetisch abgeschirmt werden, wobei wenigstens eine Dichtung in dem Abzweiggehäuse vorgesehen ist, um einen Eindringschutz vor Staub und Wasser mindestens gemäß der Klasse IP58 zu ermöglichen

5. Kabelanschlusssystem nach einem der Ansprüche 1 bis 4, wobei die Durchgangsleitung fünf einzelne Rundkabel als Adern aufweist, wobei vorzugsweise drei der Rundkabel der Durchgangsleitung als Phasenleiter vorgesehen sind, und wobei fünf entsprechende Abzweigleitungen zu zugehörigen Rundkabeln der Durchgangsleitung verbunden werden.

6. Kabelanschlusssystem nach einem der Ansprüche 1 bis 5, wobei die Rundkabel der Durchgangsleitung einen Leitungsquerschnitt im Bereich von 15 mm² bis 150 mm² aufweisen, insbesondere wobei der Leitungsquerschnitt der Rundkabel 16 mm², 25 mm², 50 mm², 95 mm² oder 120 mm² beträgt, wobei die Rundkabel der Durchgangsleitung vorzugsweise flexibel um Ecken eines Raumes geführt werden können.

7. Kabelanschlusssystem nach einem der Ansprüche 1 bis 6, wobei die Verbindungsdosen mehrteilig aufgebaut sind, wobei ein Rundkabel der Durchgangsleitung durch einen ersten Teil einer Verbindungsdose geführt wird, während eine Abzweigleitung bereits vor Herstellung des Kontakts zwischen dem Rundkabel der Durchgangsleitung und der Abzweigleitung fest mit einem zweiten Teil der Verbindungsdose, vorzugsweise einem Deckel der Verbindungsdose, verbunden ist.

8. Kabelanschlusssystem nach einem der Ansprüche 1 bis 6, wobei die Verbindungsdose ein metallisches Kontaktelement umfasst, das zwischen einer Ader der Durchgangsleitung und einer Abzweigleitung vorgesehen ist, wobei ein erster Satz von Durchdringungskontaktelementen des Kontaktelements zur abisolierfreien Kontaktierung des Rundkabels der Durchgangsleitung vorgesehen sind und ein zweiter Satz von Durchdringungskontaktelementen des Kontaktelements zur abisolierfreien Kontaktierung der Abzweigleitung vorgesehen ist.

9. Kabelanschlusssystem nach einem der Ansprüche 1 bis 6, wobei die Verbindungsdose einen Bodenteil zur Durchführung des Rundkabels der Durchgangsleitung auf dem das Rundkabel der Durchgangsleitung aufliegt, einen Deckelteil zur Aufnahme einer Abzweigleitung, sowie einen isolierenden Einschub umfasst, wobei sich von dem Einschub wenigsten ein Durchdringungskontaktelement in Richtung des Rundkabels der Durchgangsleitung und wenigstens ein Kontaktmesser in Richtung der Abzweigleitung erstreckt um das Rundkabel der Durchgangsleitung absiolierfrei zu kontaktieren und elektrisch mit der ebenso abisolierfrei kontaktierten Abzweigleitung zu verbinden, wenn der Deckelteil in Richtung des Bodenteils gepresst wird.

10. Kabelanschlusssystem nach Anspruch 9, wobei die Verbindungsdose ein Hebelelement umfasst, wobei mittels des Hebelelements der Deckelteil in Richtung des Bodenteils gepresst werden kann.

11. Kabelanschlusssystem nach einem der Ansprüche 1 bis 6, wobei die Verbindungsdose ein metallisches Kontaktelement umfasst, welches mit zwei oder mehr Kontaktmesser die Ader der Durchgangsleitung kontaktiert, wobei sich eine Klemmenschiene einstückig an die Kontaktmesser anschließt, um einen elektrischen Kontakt mit einer in die Verbindungsdose eingeführten Abzweigleitung herzustellen.

12. Kabelanschlusssystem nach einem der Ansprüche 1 bis 11, wobei das Abzweiggehäuse Dichtungen, vorzugsweise Gummidichtungen, im Bereich des der Eingänge, Ausgänge und der Abgänge aufweist.

13. Kabelanschlusssystem nach einem der Ansprüche 1 bis 12, wobei das Abzweiggehäuse wenigstens zweiteilig aufgebaut ist, wobei ein Teil des Abzweiggehäuses als Deckel ausgestaltet ist.

14. Kabelanschlusssystem nach Anspruch 13, wobei Dichtelemente eines ersten Teils des Abzweiggehäuses, vorzugsweise eines Bodenteils, und Dichtelemente eines zweiten Teils des Abzweiggehäuses, vorzugsweise des Deckels oder eines Zwischenteils, miteinander die Dichtungen im Bereich der Eingänge und der Ausgänge des Abzweiggehäuses bilden.

15. Kabelanschlusssystem nach Anspruch 13 oder 14, wobei die Abzweigleitungen bereits im Deckel des Abzweiggehäuses vorinstalliert sind, indem die Abzweigleitungen bereits im Deckel des Abzweiggehäuses mit den jeweiligen zugeordneten Abgängen verbunden sind.

16. Ladestationsinstallation zum Laden einer Batterie von Elektrofahrzeugen, umfassend:
eine Durchgangsleitung,
mehrere Ladestationen für die Elektrofahrzeuge,
mehrere entlang der Durchgangsleitung angeordnete Kabelanschlusssysteme nach einem der Ansprüche 1 bis 15, die jeweils eine der Ladestationen elektrisch mit der Durchgangsleitung verbindet.

17. Installationssatz für eine Ladestationsinstallation zum Laden der Batterie von Elektrofahrzeugen, umfassend
mehrere Ladestationen zum Laden von Elektrofahrzeugen,
eine Leitung, die in Bezug auf ihre Strombelastung als Durchgangsleitung für mehrere anzuschließende Ladestationen dimensioniert ist, und
mehrere Kabelanschlusssysteme nach einem der Ansprüche 1 bis 15 zur abisolierfreien Kontaktierung der Durchgangsleitung an mehreren Stellen, um die entlang der Durchgangsleitung angeordneten Ladestationen elektrisch mit der Durchgangsleitung zu verbinden.
